# FASCICULE DE BREVET EUROPEEN

(11) **EP 2 011 627 B1**
(45) Date de publication et mention de la délivrance du brevet: **25.01.2012**
(21) Numéro de dépôt: 08290537.3
(22) Date de dépôt: 11.06.2008
(51) Int. Cl.: B29C 49/48, B29B 11/14

(54) **Moule pour la fabrication de récipients à poignée**
Form für die Herstellung von Behältern mit Griff
Mould for manufacturing containers with a handle

(30) Priorité: 13.06.2007 FR 0704201
(43) Date de publication de la demande: 07.01.2009
(73) Titulaire: ADS SERVICES, 95310 Saint Ouen L'Aumône (FR)
(72) Inventeur: Ridosz, Lionel, 78100 Saint Germaine en Laye (FR); Trassard, Patrick, 95100 Argenteuil (FR)
(74) Mandataire: Hammond, William

(56) Documents cités:
- EP-A- 0 061 511
- WO-A-00/26001
- WO-A-96/30189
- FR-A- 2 541 622
- GB-A- 2 041 286
- JP-A- 3 090 331
- JP-A- 3 268 907
- US-A- 4 372 454

## Description

L'invention concerne un moule pour la fabrication de récipients à poignée, par étirage-soufflage à partir de préformes munies chacune, d'un corps tubulaire étirable fermé à une extrémité et pourvu à son autre extrémité d'une bague ou goulot, et d'une poignée intégrée en forme d'anse raccordée audit corps tubulaire.

Pour fabriquer des bouteilles ou flacons et plus généralement des récipients en matériau thermoplastique, il est connu d'utiliser des préformes obtenues par exemple par injection, qui se présentent sous la forme d'un corps tubulaire fermé à une extrémité tandis que son autre extrémité ouverte est pourvue d'une bague ou goulot généralement muni d'une collerette.

Les corps des préformes doivent subir un traitement thermique avant d'être expansés au cours d'une opération de moulage par soufflage ou étirage-soufflage.

Dans une chaîne de fabrication de ce type, les préformes circulent d'un poste de fabrication à l'autre et même dans certains postes eux-mêmes comme par exemple un four de traitement thermique.

Dans le but de fabriquer des récipients munis d'un moyen de préhension, notamment pour les récipients d'une contenance de plusieurs litres, on a imaginé de rapporter un tel moyen de préhension après la fabrication du récipient sous la forme, par exemple, d'un étrier ou autre. On a aussi imaginé de réaliser une préforme déjà munie d'une poignée intégrée comme décrit dans le document WO-0026001 A.

Toutefois dans ce dernier cas, et plus particulièrement comme dans ce document, avec une poignée pleine non soumise à l'étirage et au soufflage au moment du moulage, la présence de la poignée crée une difficulté pour le moulage mais aussi pour le chauffage de la préforme, avant ledit moulage.

En effet, si la partie tubulaire de la préforme doit subir un chauffage préalable au moulage dans un four approprié, la poignée par contre doit garder sa forme sur le produit fini et ne pas subir les effets dudit chauffage.

Dans le document précité WO-0026001 A pour le moulage d'une préforme munie d'une poignée en forme d'anse, on a prévu un écran ou protecteur de la poignée et de la bague de la préforme pour notamment constituer un écran thermique lors du chauffage de la préforme.

Dans ce dispositif antérieur, pour le moulage, en particulier parce que ce système nécessite que la préforme soit en permanence accompagnée dudit protecteur, celui-ci est introduit dans un logement approprié du moule, ce qui oblige à prévoir en outre des moyens particuliers pour permettre l'introduction de la canne d'étirage-soufflage dans la préforme au cours du moulage.

Dans ce document, on décrit aussi un moule pour préforme munie d'une poignée en forme de crochet. Pour un tel mode de réalisation, il est plus facile de protéger la poignée au cours du chauffage de la préforme et le moule s'en trouve simplifié puisqu'il n'est plus nécessaire de loger le protecteur de la préforme dans le moule. Un tel moule pour la fabrication de récipients à poignée, par étirage-soufflage à partir de préformes munies chacune, d'un corps tubulaire étirable fermé à une extrémité et pourvu à son autre extrémité d'une bague ou goulot, et d'une poignée intégrée, comporte deux demi-moules munis chacun d'au moins une empreinte pour la fabrication d'au moins un récipient tandis que chaque empreinte de chaque demi-moule est destinée à recevoir le corps tubulaire d'une préforme, chaque empreinte de chaque demi-moule présentant une rainure de forme générale correspondant à au moins une partie de la poignée de la préforme pour recevoir et maintenir celle-ci au cours de l'opération d'étirage-soufflage, ladite rainure étant en outre réalisée entre deux parties pleines du demi-moule, à savoir : une partie pleine extérieure à la poignée et une partie pleine correspondant au vide intérieur de la poignée.

Du fait que les inventeurs ont su maîtriser par ailleurs l'orientation angulaire des préformes tout au long de la chaîne de fabrication des récipients, ils ont imaginé un moule pour la fabrication de récipients à poignée intégrée fermée en forme d'anse raccordée en deux points au corps tubulaire de la préforme. Une telle anse présente en effet des avantages pour le produit fini. Le moule selon l'invention est du type précité mais il est remarquable en ce que ladite partie pleine intérieure à la poignée forme un noyau dont une zone est destinée à être longée par une partie dudit corps tubulaire de la préforme.

Toutefois, pour une poignée de ce type, le moulage comme le démoulage, peuvent s'avérer difficiles du fait notamment du chauffage inévitable de ladite poignée.

Selon un mode de réalisation tout à fait avantageux et original, au moins l'un des bords de la rainure présente sur une grande partie de la profondeur de la rainure, un évasement vers l'extérieur afin notamment de réaliser un reformage de la poignée au cas où celle-ci aurait subi une légère déformation et/ou un ramollissement au moment du chauffage de la préforme, qui précède son moulage.

Par exemple, seul le fond de la rainure présente une dimension correspondant sensiblement à celle de la poignée, le reste de la rainure étant évasé vers l'extérieur.

Il est clair que l'évasement préconisé n'est pas une simple dépouille de démoulage ou un simple chanfrein mais bien un évasement important et de manière préférentielle, l'évasement de la rainure forme un angle compris entre 30° et 45° par rapport à une perpendiculaire au plan de jonction du moule.

Par exemple aussi, la partie pleine du demi-moule formant la partie extérieure de la rainure est interrompue sur la partie inférieure de la poignée de telle sorte que cette partie inférieure de la poignée se trouve dans la cavité de moulage pour être au final sensiblement en contact avec la paroi correspondante du récipient fini.

L'invention sera bien comprise à la lecture de la description qui va suivre et qui se réfère aux dessins annexés, dans lesquels :
- Les figures 1 et 2 représentent respectivement en perspective et en élévation un demi-moule à trois empreintes selon l'invention,
- les figures 3 et 4 correspondent aux figures respectivement 1 et 2, avec une préforme disposée dans chaque empreinte,
- la figure 5 représente le demi-moule des figures précédentes après moulage,
- les figures 6 et 7 sont des coupes selon respectivement VI-VI de la figure 2 et VII-VII de la figure 4.

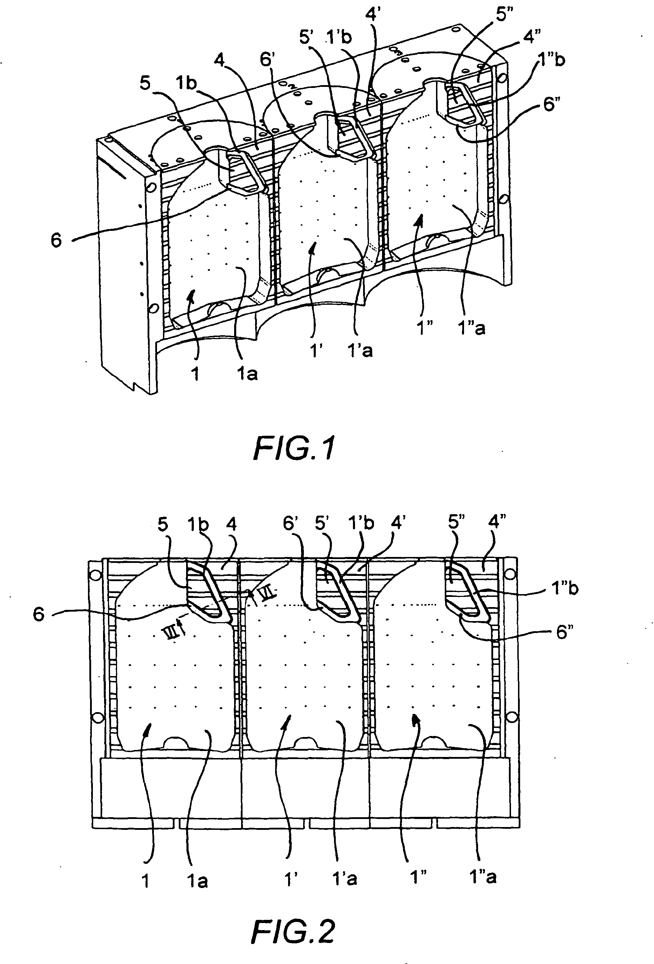

Sur les figures 1 et 2 on peut voir un demi-moule selon l'invention comportant dans cet exemple trois empreintes 1, 1', 1".

Le nombre d'empreintes peut bien entendu être quelconque et il est clair qu'un moule complet comporte deux demi-moules identiques tels que représentés.

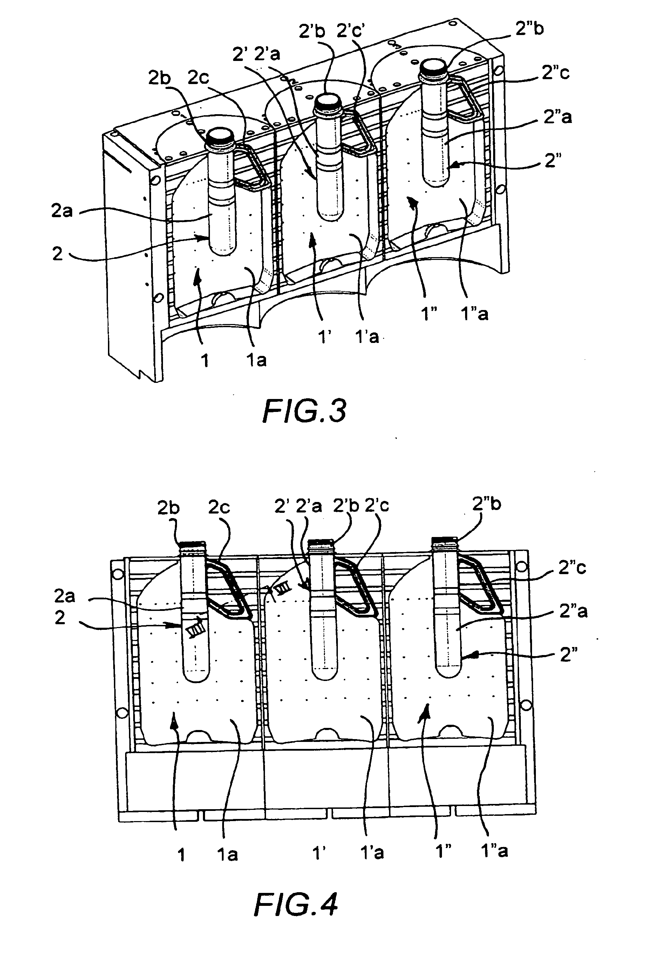

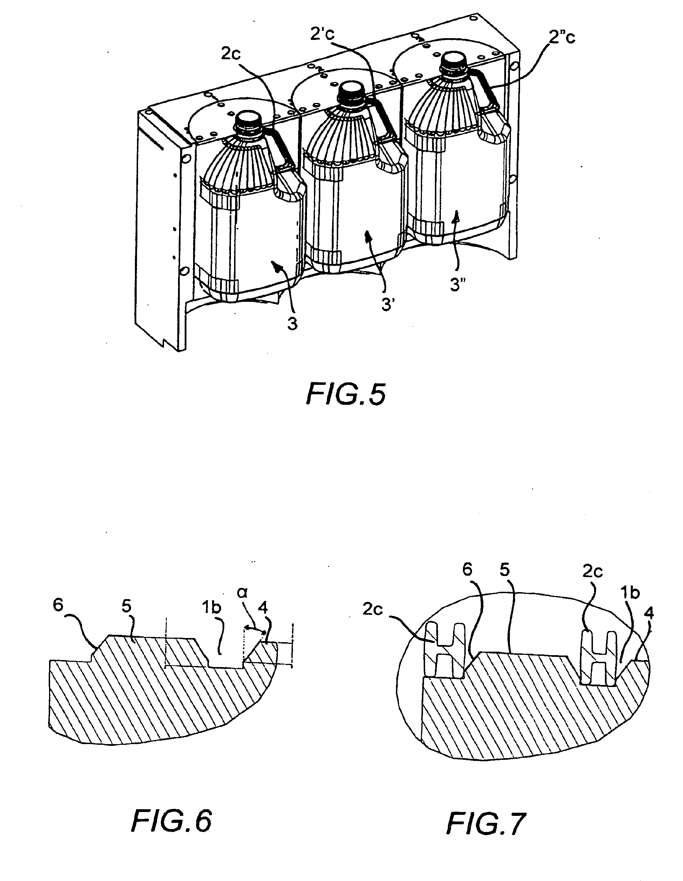

Les demi-moules représentés sont destinés à fabriquer par moulage à partir de préformes 2, 2', 2" (figures 3 et 4) des récipients 3, 3', 3" (figure 5) par un procédé de moulage par soufflage et plus particulièrement par étirage-soufflage.

Il est particulièrement difficile comme déjà dit, de fabriquer des récipients munis d'une poignée intégrée et en particulier d'une poignée fermée en forme d'anse à partir de préformes 2, 2', 2" munies chacune, d'un corps tubulaire 2a, 2'a, 2"a fermé à une extrémité et pourvu à son autre extrémité d'une bague ou goulot 2b, 2'b, 2"b, et d'une poignée 2c, 2'c, 2"c raccordée en deux points audit corps tubulaire 2a, 2'a, 2"a de la préforme.

Pour y parvenir, chaque empreinte 1, 1', 1" d'un demi-moule est pourvue d'une cavité 1 a, 1'a, 1 "a pour réaliser le récipient en lui-même et une rainure 1b, 1'b, 1 "b de forme générale correspondant à au moins une partie de la poignée 2c, 2'c, 2"c de la préforme.

La rainure 1b, 1'b, 1 "b de l'empreinte est proche de la forme générale de la poignée en vue de bien maintenir celle-ci au cours du moulage.

Chaque rainure est réalisée comme le montrent les dessins, entre deux parties pleines du demi-moule et plus particulièrement une partie pleine extérieure 4, 4', 4" et une partie pleine 5, 5', 5" correspondant au vide intérieur de la poignée 2c, 2'c, 2"c en formant un noyau dont une partie, comme le montrent bien les figures 3 et 4, est destinée à être longée par une partie du corps tubulaire 2a, 2'a, 2"a de la préforme.

En outre, comme le montrent aussi les dessins, selon le mode de réalisation représenté, la partie pleine 4, 4', 4" du demi-moule formant la partie extérieure de la rainure est interrompue sur la partie inférieure de la poignée formant ainsi un bord libre 6, 6', 6", comme le montrent bien les figures 1, 2, 6 et 7.

De la sorte, le bord de la partie inférieure de la poignée se trouve dans la cavité 1 a, 1'a, 1 "a du demi-moule.

Cette disposition fait en sorte que le dessous de la poignée 2c, 2'c, 2"c du récipient sera sensiblement au contact avec la paroi correspondante du récipient fini 3, 3', 3". Toutefois, il est clair que ce mode de réalisation n'est pas obligatoire et qu'une rainure complète peut être prévue pour confectionner une poignée plus séparée du récipient.

Si la rainure 1b, 1'b, 1"b du demi-moule est destinée a bien maintenir la poignée au cours du moulage, elle permet aussi de la reformer au cas notamment où celle-ci se serait légèrement déformée et/ou ramollie au cours du chauffage de la préforme qui précède le moulage, malgré les précautions prises. Or cette déformation est aléatoire et non contrôlable.

A cet effet, la rainure selon l'invention, comme le montrent bien les figures 6 et 7, présente sur une grande partie de sa profondeur, un évasement vers l'extérieur.

Seul le fond de la rainure, ici à fond plat et à section en forme de U, présente la dimension de la poignée, dont la section est dans cet exemple en forme de H, comme le montrent les figures 6 et 7.

Le bord 6 ouvert dans la cavité de l'empreinte est également évasé comme le montrent lesdites figures.

Il est clair qu'il ne s'agit pas ici d'un simple chanfrein ou dépouille, mais bien d'un évasement important.

Cet évasement permet, d'une part, une fermeture correcte du moule de soufflage par glissement de la poignée le long de l'évasement vers le fond de rainure en évitant ainsi tout pincement de la poignée et, d'autre part, comme déjà dit, de reformer cette dernière selon la forme souhaitée et de manière répétitive en s'affranchissant ainsi de sa déformation préalable aléatoire.

Les inventeurs préconisent que ledit évasement, comme le montrent les figures 6 et 7, forme un angle α par rapport à une perpendiculaire au plan de jonction du moule délimitée ici par les surfaces planes des parties pleines 5 et 4, compris entre 30° et 45°.

## Revendications

1. Moule pour la fabrication de récipients (3,3',3") à poignée (2c,2'c,2"c), par étirage-soufflage à partir de préformes (2,2',2") munies chacune, d'un corps tubulaire (2a,2'a,2"a) étirable fermé à une extrémité et pourvu à son autre extrémité d'une bague ou goulot (2b,2'b,2"b), et d'une poignée intégrée (2c,2'c,2"c) fermée en forme d'anse raccordée en deux points audit corps tubulaire, ledit moule comportant deux demi-moules munis chacun d'au moins une empreinte (1,1',1") pour la fabrication d'au moins un récipient (3,3',3") tandis que chaque empreinte de chaque demi-moule est destinée à recevoir le corps tubulaire (2a,2'a,2"a) d'une préforme, chaque empreinte de chaque demi-moule présentant une rainure (1b,1'b,1"b) de forme générale correspondant à au moins une partie de la poignée (2c,2'c,2"c) de la préforme pour recevoir et maintenir celle-ci au cours de l'opération d'étirage-soufflage, ladite rainure étant en outre réalisée entre deux parties pleines (4,4',4" ; 5,5',5") du demi-moule, à savoir : une partie pleine extérieure (4,4',4") à la poignée et une partie pleine (5,5',5") correspondant au vide intérieur de la poignée, moule **caractérisé en ce que** ladite partie pleine intérieure (5,5',5") à la poignée forme un noyau dont une zone est destinée à être longée par une partie dudit corps tubulaire (2a,2'a,2"a) de la préforme.

2. Moule selon la revendication 1, **caractérisé en ce qu'**au moins l'un des bords de la rainure (1b, 1'b, "b) présente sur une grande partie de la profondeur de la rainure, un évasement vers l'extérieur afin notamment de réaliser un reformage de la poignée (2c,2'c,2"c) au cas où celle-ci aurait subi une légère déformation et/ou un ramollissement au moment du chauffage de la préforme, qui précède son moulage.

3. Moule selon la revendication 2, **caractérisé en ce que** seul le fond de la rainure (1b,1'b,1"b) présente une dimension correspondant sensiblement à celle de la poignée, le reste de la rainure étant évasé vers l'extérieur.

4. Moule selon l'une des revendications 2cm 3, **caractérisé en ce que** l'évasement de la rainure forme un angle (α) compris entre 30° et 45° par rapport à une perpendiculaire au plan de jonction du moule.

5. Moule selon l'une des revendications 1 à 4, **caractérisé en ce que** la partie pleine (4,4',4") du demi-moule formant la partie extérieure de la rainure est interrompue sur la partie inférieure de la poignée de telle sorte que cette partie inférieure de la poignée se trouve dans la cavité (1a,1'a,1"a) de moulage pour être au final sensiblement en contact avec la paroi correspondante du récipient fini.

## Claims

1. Mould for manufacturing containers (3, 3', 3") with a handle (2c, 2'c, 2"c), by drawing and blowing from preforms (2, 2', 2") each provided with a drawable tubular body (2a, 2'a, 2"a) closed at one end and provided at its other end with a ring or neck (2b, 2'b, 2"b), and an integral handle (2c, 2'c, 2"c) which is closed in the form of a loop and connected at two points to said tubular body, said mould comprising two half moulds each provided with at least one cavity (1, 1', 1") for manufacturing at least one container (3, 3', 3") whereas each cavity of each half mould is designed to receive the tubular body (2a, 2'a, 2"a) of a preform, each cavity of each half mould exhibiting a groove (1b, 1'b, 1"b) of general shape corresponding to at least one portion of the handle (2c, 2'c, 2"c) of the preform to receive and hold the latter in the course of the drawing and blowing operation, said groove additionally being formed between two solid portions (4, 4', 4"; 5, 5', 5") of the half mould, namely: a solid portion (4, 4', 4") outside the handle and a solid portion (5, 5', 5") corresponding to the void inside the handle, said mould being **characterised in that** said solid portion (5, 5', 5") on the inside of the handle forms a core one zone of which is designed to be flanked by a portion of said tubular body (2a, 2'a, 2"a) of the preform.

2. Mould according to claim 1, **characterised in that** over a large portion of the depth of the groove, at least one of the edges of the groove (1b, 1'b, 1"b) exhibits a flared widening towards the outside in order in particular to effect a corrective shaping of the handle (2c, 2'c, 2"c) in the event that the latter has suffered slight deformation and/or softening at the moment of heating of the preform, preceding its moulding.

3. Mould according to claim 2, **characterised in that** only the bottom of the groove (1b, 1'b, 1"b) exhibits a dimension corresponding substantially to that of the handle, the rest of the groove exhibiting a flared widening towards the outside.

4. Mould according to one of claims 2 or 3, **characterised in that** the flared widening of the groove forms an angle (α) of between 30° and 45° in relation to a perpendicular to the plane of junction of the mould.

5. Mould according to one of claims 1 to 4, **characterised in that** the solid portion (4, 4', 4") of the half mould forming the outer portion of the groove is interrupted in the lower portion of the handle such that this lower portion of the handle is located in the mould cavity (1a, 1'a, 1"a) to be ultimately substantially in contact with the corresponding wall of the finished container.

## Patentansprüche

1. Form für die Herstellung von Behältern (3, 3', 3") mit Griff (2c, 2'c, 2"c) durch Blasformen ausgehend von Vorformlingen (2, 2', 2") die jeweils mit einem streckbaren röhrenförmigen Körper (2a, 2'a, 2"a), welcher an einem Ende geschlossen ist und an seinem anderen Ende einen Ring oder Hals (2b, 2'b, 2"b) aufweist, und mit einem integrierten Griff (2c, 2'c, 2"c) versehen sind, welcher in Form eines Henkels geschlossenen an zwei Punkten mit dem röhrenförmigen Körper verbunden ist, wobei die Form zwei Formhälften umfasst, die jeweils mit mindestens einem Abdruck (1, 1', 1") zur Herstellung mindestens eines Behälters (3, 3', 3") ausgestattet sind, wobei jeder Abdruck jeder Formhälfte zur Aufnahme des röhrenförmigen Körpers (2a, 2'a, 2"a) eines Vorformlings bestimmt ist, jeder Abdruck jeder Formhälfte eine Nut (1 b, 1'b, 1 "b) aufweist, deren Form zumindest einem Teil des Griffes (2c, 2'c, 2"c) des Vorformlings allgemein entspricht zum Aufnehmen und Halten des Griffes während des Arbeitsgangs des Blasformens, und wobei diese Nut ferner zwischen zwei vollen Teilen (4, 4', 4"; 5, 5', 5") der Formhälfte gebildet ist, nämlich einem vollen Teil (4, 4', 4") außen am Griff, und einem vollen Teil (5, 5', 5"), welcher dem Leeraum innen am Griff entspricht, die Form **dadurch gekennzeichnet, dass** der volle Teil (5, 5', 5") innen am Griff einen Kern bildet mit einem Bereich der dazu bestimmt ist, dass ein Teil des röhrenförmigen Körpers (2a, 2'a, 2"a) des Vorformlings hieran entlang geführt ist.

2. Form nach Anspruch 1 **dadurch gekennzeichnet, dass** mindestens ein Rand der Nut (1 b, 1'b, 1 "b), auf einem Großteil der Tiefe der Nut, eine nach außen gerichtete Aufweitung aufweist, um insbesondere ein Neuformen des Griffes (2c, 2'c, 2"c) zu erzielen, falls dieser eine leichte Verformung und/oder ein Erweichen bei der dem Formen vorangehenden Erwärmung des Vorformlings erlitten hat.

3. Form nach Anspruch 2 **dadurch gekennzeichnet, dass** lediglich der Boden der Nut (1 b, 1'b, 1 "b) eine Abmessung aufweist, welche im Wesentlichen derjenigen des Griffes entspricht und der Rest der Nut nach außen aufgeweitet ist.

4. Form nach einem der Ansprüche 2 oder 3 **dadurch gekennzeichnet, dass** die Aufweitung der Nut einen Winkel (α) zwischen 30° und 45° bildet, bezogen auf eine Senkrechte zur Ebene des Zusammenführens der Form.

5. Form nach einem der Ansprüche 1 bis 4, **dadurch gekennzeichnet, dass** der volle Teil (4, 4', 4") der Formhälfte welcher das Äußere der Nut bildet am unteren Teil des Griffs derart unterbrochen ist, dass dieser untere Teil des Griffs sich so im Formhohlraum (1a, 1'a, 1"a) befindet, dass dieser schließlich an der entsprechenden Wand des fertig gestellten Behälters im Wesentlichen anliegt
